# DEMANDE DE BREVET EUROPEEN

(11) **EP 1 052 134 A1**
(43) Date de publication de la demande: **15.11.2000**
(21) Numéro de dépôt: 00401213.4
(22) Date de dépôt: 03.05.2000
(51) Int. Cl.: B60K 37/00, B60H 1/00

(54) **Planche de bord de véhicule automobile équipée d'un vide-poche et d'au moins une conduite de distribution d'air**

(30) Priorité: 11.05.1999 FR 9906010
(71) Demandeur: SAI Automotive Allibert Industrie, 92748 Nanterre (FR)
(72) Inventeur: Leserre, Dominique, 77144 Chalifert (FR); Euvrard, Franck, 95000 Cergy (FR)
(74) Mandataire: Lerner, François

(57) **Abrégé**

L'invention concerne une planche de bord (10) pour véhicule automobile comprenant un vide poche (30) accessible depuis l'intérieur de l'habitacle du véhicule et au moins une conduite (50) de distribution et/ou de répartition d'air vers l'intérieur dudit habitacle présentant une direction principale xx' d'allongement et de circulation de l'air, caractérisée en ce que le vide poche (30) étant délimité par au moins une paroi dorsale (35) et des parois latérales (32, 34) de façon à définir entre elles un volume de rangement creux (36), ladite paroi dorsale (35) constitue une paroi frontale (55) de ladite conduite (50) de distribution et/ou de répartition d'air.

## Description

Le domaine de l'invention est celui des équipements intérieurs de véhicule automobile, et en particulier des planches de bord.

On connaît déjà des planches de bord équipées d'un vide poche accessible depuis l'intérieur de l'habitacle du véhicule et renfermant une ou plusieurs conduite(s) de distribution et de répartition d'air froid ou chaud vers l'intérieur de l'habitacle, ladite conduite présentant alors une direction principale d'allongement et de circulation de l'air.

Ces conduites, reliées à un système de production et de propulsion d'air (climatisation, motoventilateur, volets basculants), sont typiquement constituées par des profilés à sections closes pouvant avoir des formes diverses (ronde, ellipsoïdale, carrée, rectangulaire ou autre) et sont placées sous la planche de bord et aboutissent à des déflecteurs d'orientation de l'air disposés à la surface de celle-ci pour aérer l'habitacle ou désembuer des surfaces vitrées (pare-brise ou vitres latérales).

Mais dans les planches de bord de l'art antérieur telles qu'elles viennent d'être présentées, l'intégration des conduites à l'intérieur de celles-ci n'est pas idéale, notamment au niveau de leur position et des relations qu'elles peuvent avoir avec les autres éléments de ladite planche de bord.

L'invention a donc pour objet d'améliorer l'intégration de conduites de distribution et/ou de répartition d'air à une planche de bord, en particulier pour un véhicule automobile type monospace.

Pour cela, il est prévu que le vide poche soit délimité par au moins une paroi dorsale et des parois latérales de façon à définir entre elles un volume de rangement, et que ladite paroi dorsale constitue une paroi frontale pour ladite conduite de distribution et/ou de répartition d'air.

En partant du principe que le vide poche est accolé à la conduite de distribution d'air, devant celle-ci, il peut alors être intéressant de profiter de cette disposition particulière pour prévoir que la conduite soit disposée essentiellement verticalement et qu'elle soit incurvée avec une concavité orientée vers l'habitacle, sa partie extrême aval (haute) étant alors sensiblement verticale et située au niveau d'une partie haute de la planche de bord, et sa partie extrême amont (basse) étant alors sensiblement horizontale et adaptée pour être disposée, lorsque la planche de bord est placée dans l'habitacle, sensiblement au niveau du plancher du véhicule, de façon à être reliée à un conduit annexe sensiblement horizontal d'amenée d'air. Dans ce cas, il est alors également préférable que la paroi arrière du vide poche se prolonge vers l'extrémité amont de la conduite, de façon à ne constituer à cet endroit que la paroi avant de ladite conduite, "l'amont" et "l'aval" seront définis par rapport au sens de circulation de l'air dans la conduite de distribution.

Ainsi, la paroi arrière du vide poche présente deux fonctions distinctes. Dans une première partie supérieure, elle définit une paroi commune au vide poche et à la conduite de distribution d'air, et dans une seconde partie inférieure, elle ne définit plus que la paroi avant de la conduite (la boite à gant se ne se prolongeant pas le long de partie inférieure de la paroi arrière), ceci en particulier pour des questions d'ergonomie, de facilité de fabrication et de réduction des coûts (limitation du nombre de pièces). A noter que cette solution permet de placer le groupe de chauffage à l'écart de la planche de bord, d'où à nouveau un gain de place à cet endroit Cette portion non commune au vide poche et à la conduite augmente en outre la surface libre de l'habitacle tout en permettant de rendre proéminent le vide poche en le faisant avancer nettement vers l'intérieur de l'habitacle par rapport au reste de la planche de bord.

De façon à assurer une bonne fixation de la conduite de distribution et/ou de répartition d'air au vide poche, ladite conduite sera de préférence délimitée par au moins deux parois latérales et une paroi arrière de liaison s'étendant entre elles, et certaines au moins de ces parois latérales ainsi que la paroi dorsale du vide poche présenteront alors de préférence, sensiblement parallèlement à la direction principale d'allongement de la conduite, des rails allongés et des gorges coopérant entre eux par insertion.

En particulier, la conduite de distribution d'air pourra comprendre deux conduits sensiblement verticaux et parallèles entre eux, disposés côte à côte et séparés par une cloison centrale commune aux deux conduits dont une extrémité libre coopère avec la paroi dorsale du vide poche pour venir se fixer à elle par l'intermédiaire d'un rail et d'une gorge prévus sur la conduite et sur la paroi dorsale du vide poche.

Dans le même but de garantir une bonne fixation de la conduite sur le vide poche, les parois latérales de la conduite de distribution d'air pourront présenter, sensiblement parallèlement à la direction principale d'allongement de la conduite de distribution d'air, et dans le prolongement latéral des rails, des rebords faisant saillie vers l'extérieur desdites parois et présentant des passages pour la réception à travers eux de moyens de fixation annexes adaptés pour fixer ladite conduite de distribution d'air à la paroi dorsale du vide poche.

Dans le cadre particulier de l'intégration de la planche de bord dans un véhicule de type monospace, le vide poche sera de préférence disposé sensiblement au centre de la planche de bord et la conduite de distribution et/ou de répartition d'air renfermera un ou plusieurs volet(s) de répartition de l'air vers des conduits secondaires d'aération ou de désembuage cachés derrière la planche de bord et auxquels la conduite principale est raccordée par une de ses extrémités.

Selon une caractéristique complémentaire, la conduite principale pourra présenter une forme générale arquée suivant sa direction générale d'allongement, de manière à épouser une forme complémentaire arquée de la paroi dorsale du vide poche.

L'invention et sa mise en oeuvre apparaîtront encore plus clairement à l'aide de la description qui va suivre, faite en référence aux dessins dans lesquels :
- la figure 1 est une vue en perspective d'une planche de bord de véhicule automobile conforme à l'invention,
- la figure 2 est une vue éclatée de certains éléments de la planche de bord,
- la figure 3 est une vue en coupe de détail, et
- la figure 4 est une autre vue en coupe de détail.

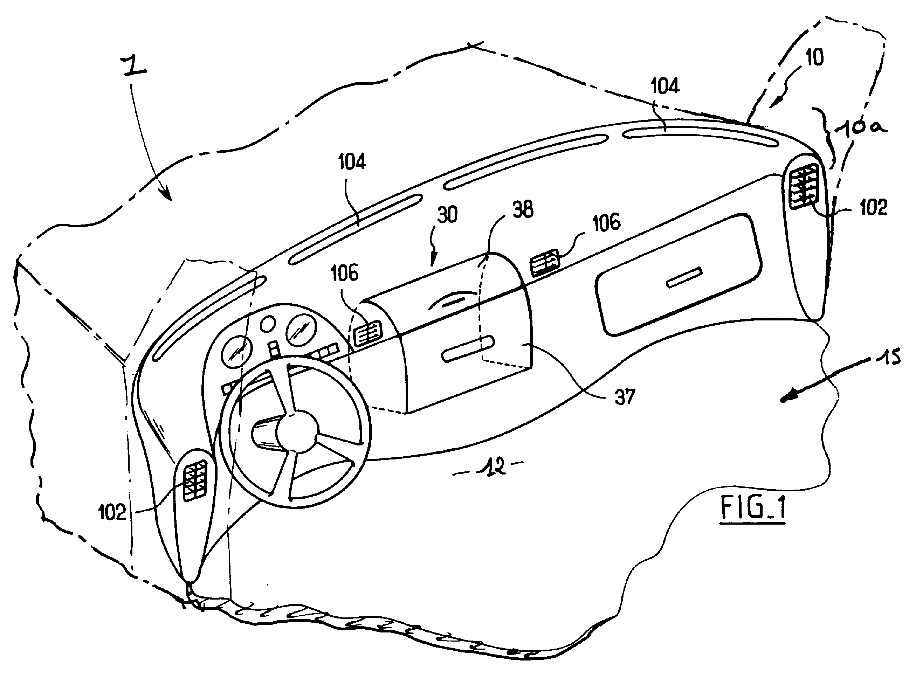

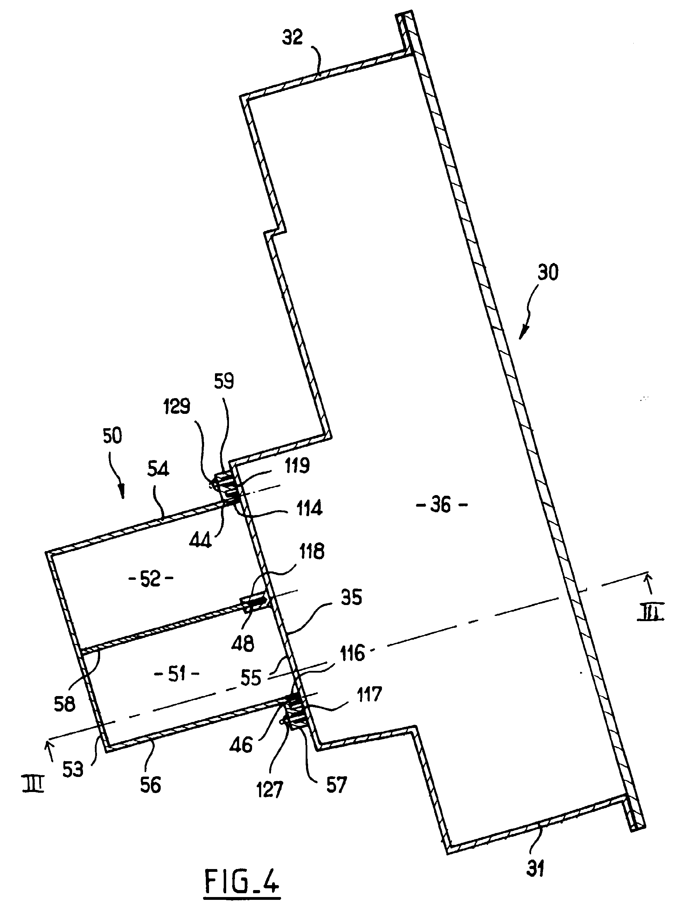

Sur la figure 1, on voit représentée une planche de bord 10 équipant un habitacle intérieur 12 d'un véhicule automobile 1 présentant un plancher 15 sensiblement plat et horizontal. Typiquement, cette planche de bord 10 est réalisée en matière(s) plastique(s) moulée(s), par exemple par un procédé d'injection sous pression. En divers endroits (non représentés), la planche de bord 10 est fixée à une pièce de structure 20 (voir figure 4) du véhicule telle qu'une traverse métallique rigide qui reprend une partie au moins des efforts de la planche de bord 10, comme cela est classique dans les voitures actuelles. Typiquement, d'autres pièces métalliques appartenant à la structure du véhicule peuvent par ailleurs reprendre les efforts de cette planche de bord 10.

La planche de bord 10 est équipée d'un vide poche 30 (appelé encore boite à gants ou bac de rangement) qui est disposé ici en position centrale, comme c'est notamment le cas dans un véhicule de type monospace (appelé encore monocorps), et qui est accessible depuis l'intérieur de l'habitacle du véhicule.

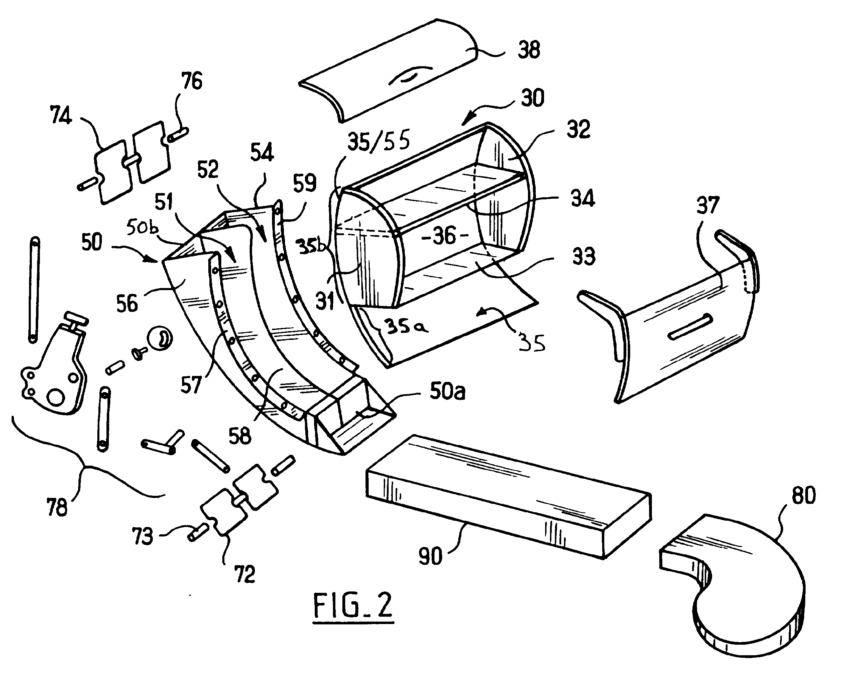

Comme on peut le voir sur la figure 2, ce vide poche 30 est délimité par des parois latérales 31 et 32, une paroi inférieure 33 destiné à recevoir des objets posés dessus, une tablette intermédiaire 34 servant également de support à d'autres objets plus petits et une paroi dorsale 35, de telle sorte que ces différentes parois définissent entre elles un volume creux de rangement 36 qui est ici clos par une porte inférieure coulissante 37 et une porte supérieure basculante 38.

Comme on peut le voir également sur les figures 2 à 4, la planche de bord 10 renferme également des conduites 50/92/94/96 d'alimentation et de répartition d'air qui permettent de faire circuler de l'air chaud ou froid afin de l'amener à différents endroits de la planche de bord, via des aérateurs (ou déflecteurs) 102/104/106, pour désembuer ou maintenir une certaine température à l'intérieur de l'habitacle (fonction aération, voire climatisation si cela est prévu).

En particulier une conduite principale 50, présentant une direction principale d'allongement xx' (ou encore une direction de circulation d'air) sensiblement verticale, est disposée en position centrale de la planche de bord 10, et est reliée, via un conduit 90 annexe d'amenée d'air qui s'étend sensiblement horizontalement et qui est disposé de préférence sous le plancher 15 de l'habitacle 12, à un système 80 de production et de propulsion d'air de type connu en soi (typiquement un échangeur thermique et un motoventilateur) et qui est de préférence éloigné de ladite conduite 50, par exemple en étant lui-même disposé sous le plancher 15 de l'habitacle 12 (et recouvert d'un capot de protection), de façon à être déporté à l'écart de la planche de bord .

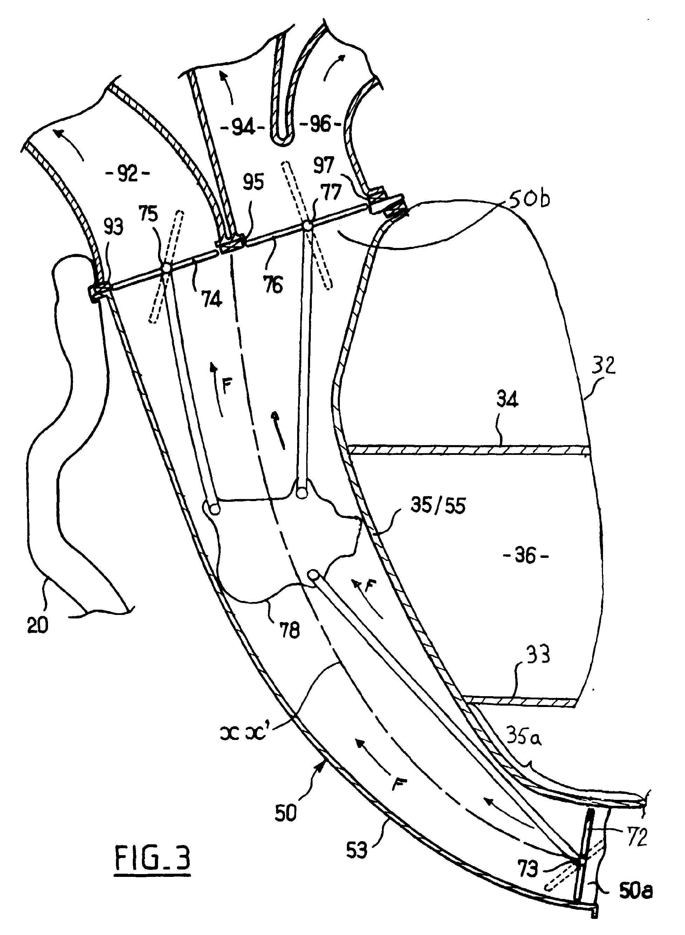

Comme on peut le voir en particulier sur les figures 3 et 4, la conduite principale 50 est plaquée contre la paroi dorsale 35 du vide poche 30 de telle sorte que cette paroi dorsale 35 constitue la paroi frontale 55 de la conduite 50. La conduite 50 est donc ainsi délimitée par cette paroi frontale 55 ainsi que par des parois latérales 54/56 et une paroi arrière 53 de façon à former deux conduits 51/52 (ou goulottes) verticaux parallèles entre eux qui sont séparés par une cloison centrale 58 commune. Ces conduits aboutissent d'une part, au niveau de l'extrémité amont 50a (partie horizontale) de la conduite principale 50, au conduit 90 d'amenée d'air, et d'autre part, au niveau de l'extrémité aval 50b (partie verticale) de ladite conduite principale 50, à plusieurs conduites secondaires 92/94/96 qui sont fixées à la conduite principale 50 par l'intermédiaire de coussinets 93/95/97 et qui circulent sous la planche de bord 10 jusqu'aux aérateurs 102/104/106.

Comme on peut le voir sur les figures 2 et 3, la paroi dorsale 35 se prolonge au-delà du vide poche 30, vers le plancher 15 et vers l'intérieur de l'habitacle 12, de telle sorte que cette paroi 35 possède deux fonctions distinctes. D'une part, sur une partie supérieure 35b, elle forme à la fois la paroi arrière 35 du vide poche 30 et la paroi frontale 55 du conduit d'air 50, et d'autre part, sur une partie inférieure 35a, elle ne constitue plus que la paroi frontale 55 du conduit 50.

On notera qu'à l'entrée de la conduite principale 50, c'est-à-dire proche de son extrémité amont 50a, il est prévu au moins un volet 72 basculant autour d'un axe 73 sensiblement perpendiculaire à la direction d'allongement xx' de la conduite principale, ce volet 72 ayant pour objet de régler le flux d'air avant sa distribution dans l'habitacle.

De la même manière, il est prévu, en sortie de la conduite principale 50, c'est-à-dire proche de son extrémité aval 50b, un ou plusieurs volets 74/76 de répartition d'air montés également sur des axes 75/77 perpendiculaires à la direction principale d'allongement xx' de la conduite principale 50.

Les volets 72/74/76 sont reliés à une commande prévue (mais non représentée) sur la planche de bord 10 et à un système mécanique 78 d'entraînement (micro moteur, roues dentées et biellettes de renvoi par exemple) de préférence externe à la conduite, permettent ainsi de répartir l'air propulsé (chaud ou froid) en puissance ainsi que entre la gauche et la droite (aérateurs 102 de la figure 2), et/ou entre les aérateurs centraux 106 ou latéraux 102, et/ou entre les aérateurs de désembuage 104 ou d'aération 106 (figure 3).

Pour venir fixer les parois latérales 54/56 de la conduite principale 50 sur la paroi dorsale 35 du vide poche 30, les parois latérales 54/56 ainsi que la cloison centrale 58 sont tout d'abord chacune pourvues d'un rail allongé 44/46/48 qui s'étend sensiblement parallèlement à la direction principale d'allongement xx' de la conduite 50 et qui vient coopérer, par exemple par insertion ou par clippage à force, avec une gorge 114/116/118 aménagée le long de la paroi dorsale 35 du vide poche 30. Sur la figure 3, on voit bien de quelle façon ces rails coopèrent et sont emprisonnés par les gorges de la paroi dorsale 35 du vide poche 30. De préférence, lesdites gorges 114/116/118 seront réalisées d'une seule pièce en matière plastique avec ladite paroi dorsale 35, par exemple par moulage par injection.

En plus de cela, les parois latérales 54/56 de la conduite principale sont également pourvues de rebords 57/59 (ou oreillettes) faisant saillie extérieurement de celles-ci et qui s'étendent sensiblement parallèlement à la direction principale xx' d'allongement de la conduite 50 de façon à être parallèles à la paroi dorsale 35 du vide poche 30. Ces oreillettes 57/59 sont munies d'orifices 117/119 traversés par des vis 127/129 ou des agrafes venant se fixer à la paroi dorsale 35 du vide poche 30 tout le long de celles-ci. Il pourra par exemple y avoir 4 vis 127/129 régulièrement espacées par rebord 57/59.

Comme on peut le voir sur les figures 2 et 4, la forme des parois latérales de la conduite principale 50 est arquée (ou courbée) et épouse la forme complémentaire arquée de la paroi dorsale 35 du vide poche 30 de façon à éviter les fuites d'air.

Bien entendu, l'invention n'est nullement limitée aux modes de réalisation illustrés à titre d'exemple non limitatif.

Ainsi, les gorges peuvent être aménagées sur les parois latérales tandis que les rails peuvent être prévus sur la paroi dorsale du vide poche et de préférence réalisés d'une pièce avec cette paroi.

La solution peut tout à fait s'appliquer à un vide poche qui ne serait pas disposé en position centrale de la planche de bord.

## Revendications

1. Planche de bord (10) pour véhicule automobile comprenant habitacle (12) et un plancher (15), la planche de bord (10) comprenant un vide poche (30) accessible depuis l'intérieur de l'habitacle du véhicule et au moins une conduite (50) de distribution et/ou de répartition d'air vers l'intérieur dudit habitacle présentant une direction principale xx' d'allongement et de circulation de l'air, caractérisée en ce que, le vide poche (30) étant délimité par au moins une paroi dorsale (35) et des parois latérales (32, 34) définissant entre elles un volume de rangement creux (36), ladite paroi dorsale (35) constitue une paroi frontale (55) de la conduite (50) de distribution et/ou de répartition d'air.

2. Planche de bord selon la revendication 1, caractérisée en ce que :
- la conduite (50) de distribution et/ou de répartition d'air est disposée essentiellement verticalement et est incurvée avec une concavité orientée vers l'habitacle (12) de telle sorte qu'elle présente une partie extrême aval (50b) sensiblement verticale et située au niveau d'une partie haute (10a) de la planche de bord (10), et une partie extrême amont (50a) sensiblement horizontale adaptée pour être disposée, lorsque ladite planche (10) de bord est installée dans l'habitacle (12) du véhicule, sensiblement au niveau du plancher (15) du véhicule, et
- la paroi dorsale (35) se prolonge en partie inférieure, au-delà du vide poche (30) et en direction de la partie extrême amont (50a) de la conduite (50), de telle sorte qu'une première partie supérieure (35b) de cette paroi (35) constitue une cloison commune (35/55) au vide poche (30) et à la conduite (50) et qu'une une seconde partie (35a) inférieure de ladite paroi (35) constitue uniquement la paroi frontale (55) de la conduite (50).

3. Planche de bord (10) selon l'une quelconque des revendications précédentes, caractérisée en ce que la conduite (50) de distribution d'air étant délimitée par au moins deux parois latérales (54, 56) et une paroi arrière (53) de liaison s'étendant entre elles, certaines au moins de ces parois latérales (54, 56) ainsi que la paroi dorsale (35) du vide poche (30) présentent, sensiblement parallèlement à la direction principale xx' d'allongement de la conduite (50), des rails allongés (44, 46) et des gorges (114, 116) coopérant entre eux par insertion, de façon à fixer la conduite (50) de distribution à la paroi dorsale (35) du vide poche (30).

4. Planche de bord (10) selon la revendication 3 caractérisée en ce que la conduite de distribution (50) d'air comprend deux conduits (51, 52) sensiblement verticaux et parallèles entre eux, disposés côte à côte et séparés par une cloison centrale (58) qui est commune aux deux conduits (51, 52) et qui coopère avec la paroi dorsale (35) du vide poche (30) pour venir se fixer à elle par l'intermédiaire d'un rail (48) et d'une gorge (118) prévus l'un sur la conduite (50) et l'autre sur la paroi dorsale (35) du vide poche (30).

5. Planche de bord (10) selon l'une quelconque des revendications précédentes, caractérisée en ce que les parois latérales (54, 56) de la conduite de distribution d'air présentent, sensiblement parallèlement à la direction principale xx' d'allongement, et dans le prolongement latéral des rails, des rebords (57, 59) faisant saillie vers l'extérieur desdites parois (54, 56) et présentant des passages (117, 119) pour la réception à travers eux de moyens de fixation (127, 129) adaptés pour fixer ladite conduite de distribution d'air (50) à la paroi dorsale (35) du vide poche (30).

6. Planche de bord (10) selon l'une quelconque des revendications précédentes, caractérisée en ce que le vide poche (30) est disposé sensiblement au centre de la planche de bord (10) et la conduite (50) de distribution et/ou de répartition d'air renferme un ou plusieurs volet(s) (72, 74, 76) de répartition de l'air vers des conduits secondaires (92, 94, 96) d'aération ou de désembuage cachés derrière la planche de bord (10) et auxquels ladite conduite de distribution d'air (50) est raccordée par une de ses extrémités.

7. Planche de bord (10) selon l'une quelconque des revendications précédentes, caractérisé en ce que ladite conduite de distribution d'air (50) présente une forme générale arquée suivant la direction principale xx' d'allongement, de manière à épouser une forme complémentaire arquée de la paroi dorsale (35) du vide poche (30).
